# EUROPEAN PATENT APPLICATION

(11) **EP 4 432 145 A1**
(43) Date of publication of application: **18.09.2024**
(21) Application number: 23305341.2
(22) Date of filing: 14.03.2023
(51) Int. Cl.: G06F 21/51, G06F 21/53, G06F 21/57

(54) **SECURED ACCESS TO A TRUSTED ENVIRONMENT OF A COMPUTER**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: ROLLET, Romain, 35708 RENNES CEDEX 7 (FR)
(74) Representative: Plasseraud IP

(57) **Abstract**

The description relates to a method to secure data processing in a computer arranged according to a hybrid software architecture. The aid hybrid architecture relies on a dual operating system comprising a General-Purpose Operating System "GPOS" and a Trusted Operating System "TOS" running critical functions. The execution of a current application by the GPOS implying an access of at least one primitive to the TOS.

The method comprises:
- implementing by the GPOS an authentication procedure requiring an authentication validation granted by the TOS, and
- upon at least a validation of the authentication by the TOS, authorizing said at least one primitive to access to the TOS.

## Description

The present description relates to secured interactions between processors in computer technique.

An example of data exchanges between processors can be observed in multicore microprocessor unit ("MPU"). Modern MPU provides several executing cores, each of which reads and executes program instructions, as if the computer had several processors. Cores may or may not share caches, and they may implement message passing or shared-memory inter-core communication methods. Usually, each core has a level L1 cache, but they share level L2 cache. Homogeneous multi-core systems include only identical cores; heterogeneous multi-core systems have cores that are not identical.

A specific Interrupt Controller (called Global Interrupt Controller in ARM^{©} processors) is required to provides interrupt routing between cores, as well as Inter-processor interrupts.

RAM (Random Access Memory) and device peripherals (such as "UART" (for "Universal Asynchronous Receiver Transmitter"), and/or network interface) are shared between the different cores of the Central Processing Unit (CPU). Because of that, some memory or device bottleneck may occur when several cores are accessing the same resource simultaneously.

Hardware security mechanisms available in ARM and x86 processors and their usage to implement a Trusted Execution Environment (TEE) are described below.

ARM processors with TrustZone implement architectural Security Extensions in which each of the physical processor cores provides two virtual cores:
- one being considered non-secure, and called "Non-Secure World", and
- the other being considered secure and called "Secure World",
and a mechanism to context switch between the two, known as the "monitor mode".

The world in which the processor is currently running can be determined by the Non-Secure bit available in the Hardware Secure Configuration Register. The mechanisms by which the physical processor can enter monitor mode from the Non-Secure World can be triggered by executing a dedicated instruction named "Secure Monitor Call" (SMC) and it could be seen as an exception to the monitor mode software. Moreover, the main memory is also flagged with the Non-Secure bit, allowing memory isolation between Secure and Non-Secure worlds.

Security model implemented with the TrustZone technology provides additional segmentation through the separation of Secure World and Normal World, allowing, for example, DRM solutions ("Digital Rights Management") to protect against a hostile environment such as an infected system on both user-land and kernel-land.

Intel Software Guard Extensions (Intel SGX) offers hardware-based memory encryption that isolates specific application code and data in memory. SGX allows user-level code to allocate private regions of memory, called enclaves, which are designed to be protected from processes running at higher privilege levels.

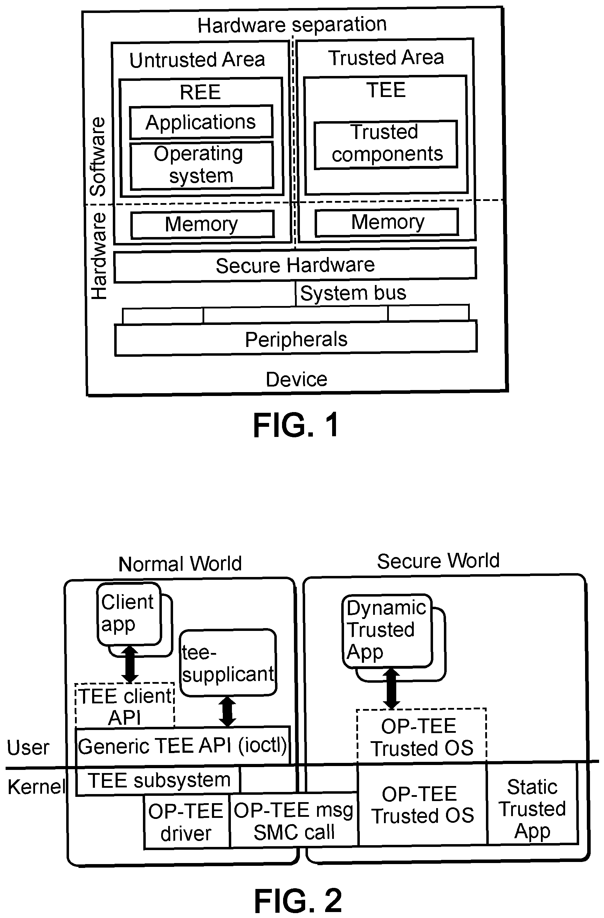

ARM TrustZone and Intel SGX are intensively used to implement Trusted Execution Environment, in particular in embedded devices such as smartphones. A Trusted Execution Environment (TEE) is an isolated execution environment that provides security features such as isolated execution, integrity of applications executing within the TEE, along with confidentiality of their assets. In general terms, the TEE offers an execution space that runs in parallel of the normal operating system and provides a higher level of security for trusted applications running on the device. The aforesaid "normal" operating system can correspond to a rich operating environment (labelled "REE" hereafter) or to a Generic Purpose Operating System. Trusted applications running in a TEE have access to the full power of a device's main processor and memory, whereas hardware isolation protects these components from user installed applications running in the main operating system. Software and cryptographic isolations inside the TEE protect the different contained trusted applications from each other. This architecture is shown on figure 1.

On a REE such as Linux, a TEE kernel driver handles the details needed to communicate with the TEE. On ARM Trustzone, lowest level of communication with OP-TEE ("Open Portable TEE") builds on ARM SMC Calling Convention (SMCCC), which is the foundation for TEE's SMC interface used internally by the driver (SMC for "Secure Monitor Call").

The kernel TEE subsystem deals with:
- Registration of TEE drivers
- Managing shared memory between Linux and the TEE
- Providing a generic API (Application Programming Interface) to the TEE.

TEE applications and components rely on an internal API called TEE Internal Core API whereas the TEE Client API is the API describing how to communicate with a TEE from a Client application running in the REE. The API makes usage of a generic TEE API that accesses the kernel driver using standard POSIX communication methods (IEEE 1003) relying on file descriptor and ioctl ("input-output control") as shown in the figure 2.

In Hybrid Software Architectures, as disclosed for example in document EP3872634, attempts addressed the cohabitation on a single processor of services and applications with heterogeneous network QoS (Quality of Service) requirements, security constraints and implementation complexity. Indeed, in a single system, some applications may have strong real-time constraints as introduced in the previous section, meaning they cannot support a latency greater than several microseconds when a network event occurs (e.g. reception of a message). This kind of application is not very complex and are usually implemented over a Trusted Operating System ("TOS" hereafter) which operates usually in real-time to guaranty very low latency. But the system shall also support much more complex applications that does not have real-time requirement or have soft real-time. Those applications may require frequent update, may be extended by software plug-ins and include many user functions. They are usually implemented over a General Purpose OS.

The following application requirements cannot be satisfied by the exclusive use of some usual generic OS (like Linux, VxWorks). For instance, operating systems of a modern industrial communication platform must support different capabilities:
- Control network latency
- Respect security to prevent from attacks
- Support of complex applications/ multiple protocols stack
- Flexibility (software running over generic OS) for cost reduction considering development process
- Integration and control of hardware Ethernet interface with heterogeneous capabilities.

Hybrid software architecture relies on a dual-OS monitor (same role as the hypervisor in software virtualization) designed to concurrently execute a TOS or BareMetal (BM) application, and a GPOS (General-Purpose Operating System) on the same core. Hybrid software architecture takes advantage of the ARM TrustZone security extensions to run each OS in a different Security state.

The main features of Hybrid software are:
- Allows running a TOS and a GPOS concurrently on top of the same processor.
- TOS memory and devices are protected from illegal accesses by the GPOS. This is supported by configuring resources used by the TOS to be accessible only from Trust state. The remaining resources are configured to be accessible both from Trust and Non-Trust state.
- TOS real-time requirements are guaranteed. Time isolation of the TOS activities is supported by carefully allocating two types of interrupts (i.e.: FIQ (Fast Interrupt reQuest) and IRQ (Interrupt ReQuest that is relatively normal priority)) to each TrustZone state.
- Secured interrupts are forwarded to the TOS.
- Non-secured interrupts are forwarded to the GPOS.

When a core runs both TOS and GPOS, the following rules are applied for interrupt management:
- In Secured state (TOS running), Non-secured interrupts are disabled so that the GPOS cannot interrupt the execution of the TOS. For that reason, the GPOS only executes upon an explicit request by the TOS. This is achieved through the Secure Monitor Call (SMC) instruction.
- In non-secured state (GPOS running), Secured and non-secured interrupts are enabled so that the TOS can recover the control of the processor. TrustZone is configured to prevent the Non-Secured side from disabling Secured interrupts. Thanks to this policy, Real-Time constraints of TOS are guaranteed and malicious code cannot modify the security configuration of the platform.

When dedicating a full core to the TOS, this policy is no more required, but it can be applied without any impact. The TOS will simply never give the hand to the GPOS on that core.

On multicore system, the monitor code is shared by all cores but except during initialization, the execution of the monitor is independent of the core. System calls and notifiers are always executed in the same core where they are triggered.

In this architecture, memory regions and peripherals have access rights so that it is possible to define some private area and peripherals managed exclusively by each OS.

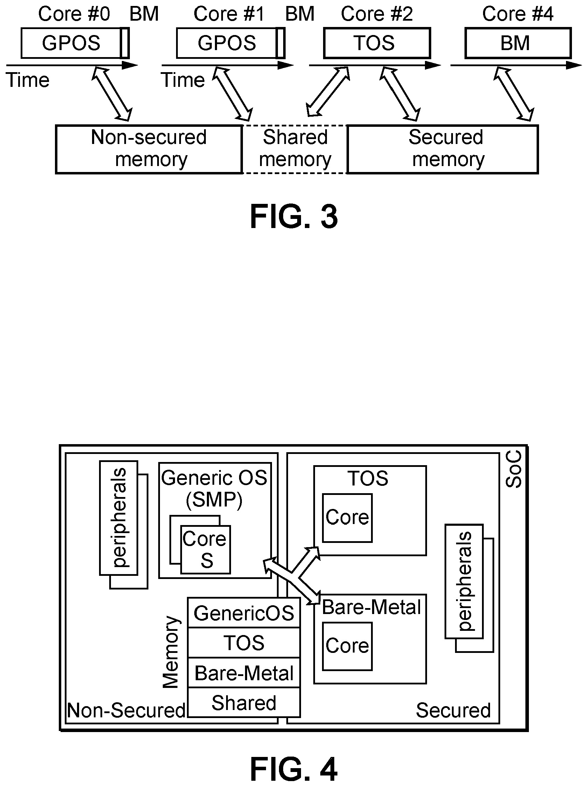

Using access rights, some private memory is defined for each OS, and cannot be accessed by other OS. As illustrated in the figure 4, OS running in the non-secured part (GPOS) cannot access memory used by OS running in the secured part. For the need of communication between the different OSs, a shared memory is available that can host FIFOs, data structures that are used to implement some communication mechanisms. Some hardware mechanisms such as interrupts can also be used to notify events from one OS to another.

In the present description, it is sought for a secure method for communication between a first OS running in the non-trusted/non-secured part such as a Rich Execution Environment or Generic Purpose OS, and a second OS running in the Trusted Execution Environment (TEE) such as a TOS.

Indeed, the OS running in the trusted part may offer some critical and secure services to the OS running in non-secure part through primitive define over the communication path opened between non-trusted and trusted OSs called hereafter "Inter-OS-Communication" (or "IOC"). For instance, when applied to industrial automation (IA) communication system, the trusted OS may provide primitives and services in charge of controlling the state of the running automates (start/stop/pause).

It is therefore sought to protect access to those critical primitives from application running over the non-trusted OS.

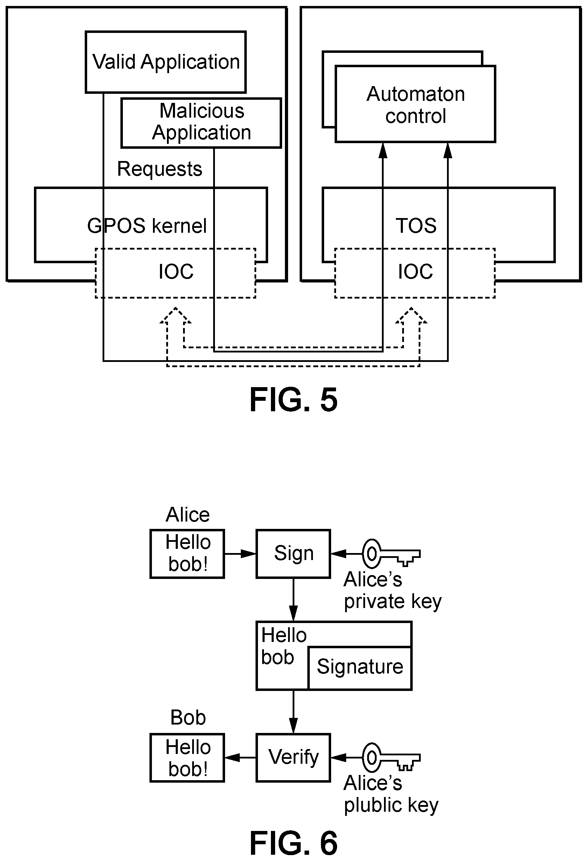

As the platform running over such a software architecture may be located in open environments, the non-trusted OS may be corrupted, and one attacker may run some applications that tries to execute malicious requests (see figure 5) using critical primitives. For instance, an attacker may mimic a certified application such as the Guide User Interface (GUI) application in charge of stopping/starting automaton, and send requests with bad parameters, forcing the Trusted OS to execute bad requests as it is illustrated in the figure 5. On the GPOS side, the application can send requests to the TOS service by using a specific file descriptor associated to IOC device driver. The GPOS kernel transfers such requests by using this IOC device driver that is in charge of managing the IOC (software) interface.

Therefore, in an open environment, it is required to protect access to critical requests so that only a set of authorized applications can execute such requests.

A solution to solve this issue can consist in adding into the GPOS some mechanisms for supporting access control security policies, including mandatory access controls at kernel and user-space level. For instance, SELinux is a set of kernel modifications and user-space tools that have been added to various Linux distributions.

A Linux kernel integrating SELinux enforces mandatory access control policies that confine user programs and system services, as well as access to files and network resources. Limiting privilege to the minimum required to work reduces or eliminates the ability of these programs and daemons to cause harm if faulty or compromised (for example via buffer overflows or misconfigurations). This confinement mechanism operates independently of the traditional Linux (discretionary) access control mechanisms. It has no concept of a "root" superuser and does not share the well-known shortcomings of the traditional Linux security mechanisms, such as a dependence on setuid/setgid binaries (for "Set owner User ID"/ "Set Group ID").

Consequently, SELinux can potentially control which activities a system allows each user, process, and daemon, with very precise specifications. It is used to confine daemons such as database engines or web servers that have clearly defined data access and activity rights. This limits potential harm from a confined daemon that becomes compromised.

However, SELinux does not protect access to some specific resources when the system is highly compromised, meaning the attacker has acquired the higher level of privileges and may access any file descriptors defined in the GPOS, in particular those used to send requests to the Trusted OS.

Therefore, there is a need for a high secure method to authenticate applications running over the non-trusted OS and filter requests so that only authorized applications are able to send request to the Trusted OS, so that the Trusted OS may trust on the origin of the request and execute it safely.

The present description aims to improve the situation.

To that end it proposes a method to secure data processing in a computer arranged according to a hybrid software architecture, said hybrid architecture relying on a dual operating system comprising a General-Purpose Operating System "GPOS" and a Trusted Operating System "TOS" running critical functions,

The execution of a current application by the GPOS implying an access of at least one primitive to the TOS,

Wherein the method comprises:
- implementing by the GPOS an authentication procedure requiring an authentication validation granted by the TOS, and
- upon at least a validation of the authentication by the TOS, authorizing said at least one primitive to access to the TOS.

Therefore, the GPOS is programmed for launching the authentication procedure, typically when the execution of an instruction of the computer program of the current application causes a primitive to request access to the TOS, and the TOS is programmed to check authentication parameters provided by the GPOS when the GPOS implements the authentication procedure.

Therefore, in an embodiment, a computer program of said current application can comprise at least one instruction, the execution of which by the GPOS launches said at least one primitive requesting access to the TOS.

This can be a specific feature of the computer program of the current application to have thus an instruction to cause the implementation of the authentication procedure, for example when this instruction is executed at the beginning of the run of the computer program of the current application. In this case, only authenticated applications can be executed by a computer having such a hybrid architecture secured according to the present description.

In an embodiment, upon request by said at least one primitive to access to the TOS, a system call launches a specific authentication primitive (an "IOC" primitive as detailed below), causing the GPOS to implement the authentication procedure.

Typically, the GPOS can be programmed to generate such a system call launching the authentication primitive as any primitive requests access to the TOS during the execution of the current application.

In this embodiment, the launching of the aforesaid specific authentication primitive generates a request from the GPOS to access to the TOS with authentication parameters to be validated by the TOS.

More generally, when the GPOS requires to the TOS said authentication validation, the GPOS provides to the TOS authentication parameters comprising at least a first set of certificate data, and the authentication procedure comprises a verification performed by the TOS of said first set of certificate data provided by the GPOS against a second set of certificate data previously stored by the TOS.

For example, the first set of certificate data can comprise data of a customer certificate, and the second set of certificate data can comprise data of a root authority certificate as a trusted certificate, stored in a secured memory accessible only by the TOS. This storing can be performed during an initialization step of configuring the TOS.

This initialization step can typically correspond to an installation of the TOS, or to an update of a pre-existing TOS with authentication data.

In an embodiment, an application digest is calculated by the GPOS in a preamble step of installation of the current application, and a digital signature of a binary code of the current application is generated using the application digest and a private key associated with a public key the data of which are among said first set of certificate data.

This application digest (such as a hash for example) and the digital signature are calculated so as to be sure for the TOS that the primitives requesting access are launched from the execution of a correct application. Moreover, these data are to be signed with a correct key, otherwise the TOS refuses the access request.

In an embodiment, the aforesaid specific authentication primitive (labelled "IOC*_CtrlReq_AppAuth"* below) launches, before the execution of each current instance of the current application, a request to access to the TOS with said generated signature and said first set of certificate data. A kernel module of the GPOS processes then the request by:
- getting a Process Identifier "PID" of the current application instance,
- getting a binary executable file attached to said PID,
- computing an application digest over said binary file of the type of the application digest generated in said preamble step, and
- sending a message (labelled "IOC_IOCTL_CMD_AUTH" below) to the TOS with the application digest, said generated signature and said first set of certificate data.

The aforesaid kernel module can be seen as a program loaded into the GPOS kernel, acting as a driver to communicate with the TOS.

In this embodiment, upon reception of the message, the TOS proceeds to an authentication by:
- checking the provided first set of certificate data against said second set of certificate data securely stored in the TOS,
- checking the provided application signature using the application digest and a public key embedded into said first set of certificate data, using an asymmetric cryptography algorithm,
- signaling by sending an authentication state to the GPOS, of a success or an error, depending on the result of said checking.

In a first embodiment, the GPOS kernel module stores said authentication state in association with the PID of the current application instance, so as to filter requests initiated by one or several primitives of said current application, based on said authentication state.

In a second embodiment, the GPOS and TOS being interconnected through Inter-OS-Communication "IOC" mutual interfaces, each primitive requesting access to the TOS is filtered at one of the IOC interfaces, by the TOS using said PID for each current application instance, so as to avoid possible attacks from the GPOS kernel module.

Typically, the TOS can return a single token per current application instance, as the result of the authentication request, said token having a value defined by said authentication state, so as to avoid a fraudulent reuse of said token for other current application instances.

The present description aims also at a computer program comprising instructions causing the implementation of the method according to anyone of the precedent claims, when said instructions are executed by a processing unit.

Typically, the computer program can comprise instructions that can be shared between:
- the GPOS for identifying primitives requesting access to the TOS and for launching the authentication procedure, and
- the TOS to check authentication parameters provided by the GPOS.

The present description also aims at a current application's computer program, comprising at least one instruction which is executed when said current application's computer program is run, and the execution of which by the GPOS launches at least one primitive requesting access to the TOS, causing thereby the implementation of the authentication procedure of the method presented above.

Typically, this instruction can be executed once the current application is launched (i.e. as soon as its program starts its run). In this case, as presented above, the aforesaid current application can correspond to an authenticated application which is therefore entitled to be executed by a computer having the hybrid architecture secured according to the present description.

Besides, the present description aims also at a computer device, comprising a processing unit to implement the method as defined above (and corresponding thereby to the aforesaid computer having the hybrid architecture secured according to the present description).

More details are presented in the specification below, with reference to the appended drawings where:
- Figure 1 shows schematically a hardware separation between a Trusted Execution Environment (TEE) and a Rich operating Environment (REE),
- Figure 2 shows schematically a generic TEE API, accessing the kernel driver relying on ioctl,
- Figure 3 shows schematically a hybrid software architecture relying on a dual-OS monitor to concurrently execute a TOS or BareMetal (BM) application, and a GPOS (General-Purpose Operating System) on the same core,
- Figure 4 shows schematically Operating Systems running respectively in a secured part and in a non-secured part (GPOS) and unenabled to access to a same memory used by OS running,
- Figure 5 shows schematically a mechanism of a possible attack in a platform running hybrid software architecture,
- Figure 6 shows schematically the encryption and decryption of a shared message,
- Figure 7 shows schematically a typical public-key infrastructure (PKI),
- Figure 8 shows schematically the principle of the authentication procedure relying on IOC primitives of the normal group, and requiring a specific TOS task in the trusted part that is in charge of validating the authentication,
- Figure 9 shows schematically main steps #1 to #5 of a method according to a first embodiment of the present description,
- Figure 10 shows schematically main steps #1 to #6 according to a second embodiment,
- Figure 11 shows schematically a structure of a device to perform the method, according to an exemplary embodiment.

In the context of a system environment with a Trusted OS, it is proposed hereafter to define a secure method to filter access to some critical primitives provided by the Trusted OS services. The primitives can be classified in two groups (normal and secured). The method authenticates applications that can issue requests to the Trusted OS and filters accesses depending on the calling application, the type of requests, and the result of authentication.

Below are proposed two embodiments of the method, to prevent from attacks when the main GPOS is infiltrated, and the attacker has the ability to run application with the higher privilege level. The second embodiment can be considered as an extension of the first embodiment, allowing a stronger security because it relies exclusively on mechanisms running within the Trusted OS perimeter.

The authentication process makes usage of cryptography mechanisms: digital signage using asymmetric cryptography, chain of public key certificate, Public Key Infrastructure for key distribution/revocation. These principles are applied here to a computer system running over hybrid software architecture. Contrarily to existing solutions, the method does not require any modifications of the GPOS file system. Only the application must be designed specifically to support the proposed authentication mechanisms, and some specific steps are to be implemented when the application is deployed over the running environment.

Before detailing the aforesaid two embodiments, the principle of the use of a digital signature is reminded hereafter. A digital signature is a mathematical scheme for verifying the authenticity of digital messages or documents. A valid digital signature, where the prerequisites are satisfied, gives a recipient very high confidence that the message was created by a known sender (authenticity), and that the message was not altered in transit (integrity).

In the example of figure 6, the message is digitally signed with Alice's private key, but the message itself is not encrypted. Alice signs a message with her private key. Using Alice's public key, Bob can verify that Alice sent the message and that the message has not been modified.

A public key certificate, also known as a digital certificate or identity certificate, is an electronic document used to prove the validity of a public key. The certificate includes information about the key, information about the identity of its owner (called the "subject"), and the digital signature of an entity that has verified the certificate's contents (called the "issuer"). If the signature is valid, and the software examining the certificate trusts the issuer, then it can use that key to communicate securely with the certificate's subject.

The signature is generated by hashing the content of the certificate and then the hash is encrypted with the issuer's private key. Hashing and encryption algorithm types are usually indicated within the certificate.

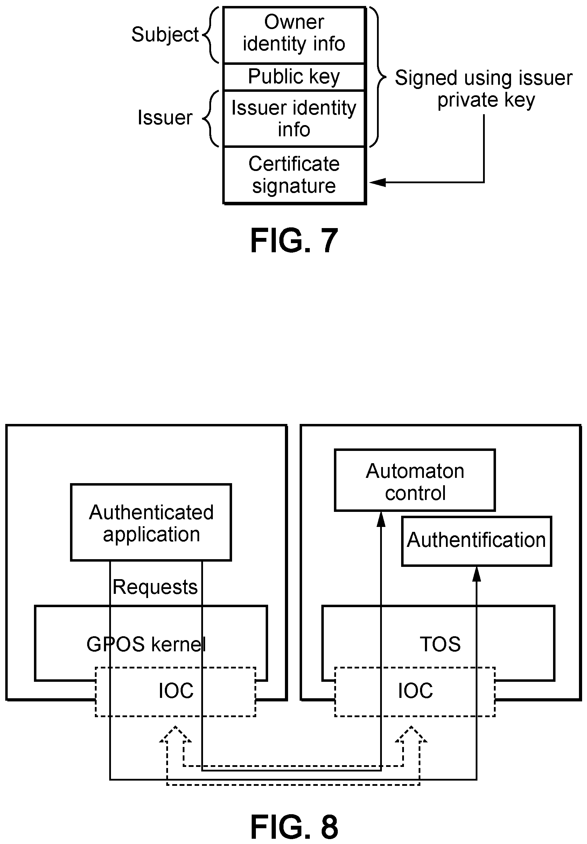

In a typical public-key infrastructure (PKI) scheme show on figure 7, the certificate issuer is a certificate authority (CA), usually a trusted third-party company that charges customers to issue certificates for them. By contrast, a self-signed certificate is a certificate with a subject that matches its issuer, and a signature that can be verified by its own public key. So, the signature of a self-signed certificate is generated using the private key corresponding to the public key embedded into the certificate.

In the context of the present description, primitives offered by the IOC interface to the user-space applications are split in two categories:
- Normal, and
- Secured.

Normal primitives can be called without any valid application authentication while secured primitives require a valid authentication. It means that an application, just after opening an IOC session after a start-up, must initiate an authentication procedure.

This authentication procedure relies on IOC primitives of the normal group. It requires a specific TOS task (in the Trusted part) that is in charge of validating the authentication process as illustrated in figure 8.

In both embodiments below, the application executable binary is signed as described in detail below. Rather than signing the full binary executable, the authentication procedure implies the signature of an application digest only, that is priorly calculated over the full application binary code. This process allows to reduce the amount of data exchanged over the IOC interface and so improve efficiency. This method requires a certificate of a user called hereafter "customer certificate" (of a natural person or a client application) that can be either generated by the customer itself or by a trusted third party called Certificate Authority (CA) when a PKI is used. For security purpose, the validity checking of this customer certificate must be done by the Trusted OS (TOS). This operation uses a Trusted certificate that can be either a self-generated certificate, a CA root or intermediate certificate that are stored securely in a memory accessible only for the Trusted OS in order to not be corrupted (typically in the memory presented in the right part of figure 1 in the Trusted Area).

In the following, it is assumed the proposed method is applied to a Control API implemented as a POSIX ioctl. This API uses file descriptor at user-space level and generates a system call ("syscall") to the kernel (such as a Linux kernel for the analogy with POSIX ioctl). This API defines IOC primitives to support request execution and also to authenticate the application that is using the API.

The first embodiment is detailed hereafter.

It is assumed that the GPOS kernel cannot be corrupted by an attacker. Only the filesystem is fully accessible thanks to high privilege access and consequently the attacker may access the user-space resource (e.g. file descriptor) associated to the IOC interface. Therefore, it can be assumed the kernel-level IOC driver is safe and cannot be corrupted (or at least an attack can be detected). Thus, an attacker cannot inject data/modify code within the code part.

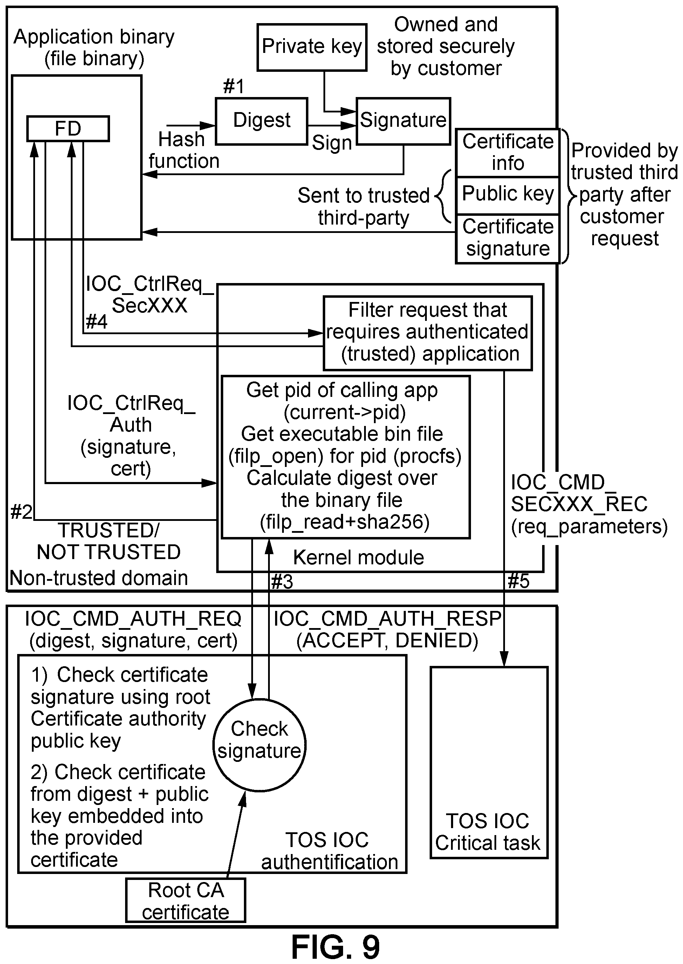

Referring to figure 9, according to this first embodiment, the method comprises the following steps when a current application is intended to be executed in the hybrid architecture:
Step #0: Data of a Root Authority Certificate (RAC) are stored at first in a secured memory of the Trusted area TOS (for example from a secured chip card or dongle or secured connection to a distant server, etc.). These RAC data make it possible to check a customer certificate provided by the Authority which originated this customer certificate. This step #0 is performed once for the computer having the hybrid architecture.
Step #1: an application digest (for example a hash, such as SHA256 hash) is first calculated over the file and the digital application signature is calculated using the application digest and the customer private key. This step is done for example by a customer's distant computer before deploying the current application and preparing the filesystem image. A customer certificate (comprising the public key associated to the customer private key) is also installed and stored in a memory accessible by the GPOS (left part of figure 1 in the "Untrusted Area") with the current application binary code and the generated application signature. The customer certificate can be thus provided by the GPOS kernel each time it requests access to the TOS during implementations of the following current Step #2 detailed below. This Step #1 is, in contrast, performed only once when the current application is deployed/installed.
Step #2: For executing the current application (when at least one secured primitive is deemed to request an access to the TOS), a system call launches a specific IOC primitive IOC_*CtrlReq_AppAuth* which is defined to engage authentication of the current application. It is reminded that a "primitive" function (called simply "primitive" here) refers to a basic function provided by a software layer of first level, i.e. just above the hardware architecture of the computer (primitives are usually provided by a programming interface). This specific IOC primitive is launched by a system call handled by the GPOS kernel itself, according to a system instruction and not according to a particular instruction of the current application (even if, of course, an instruction of the application can trigger this system instruction).

This step #2 is performed each time the current application starts a session (in practice, at the current application start-up). This specific authentication primitive (ICO) generates a request that takes the current application signature and customer certificate as parameters. The IOC kernel module is in charge of processing the system call and executes the following operations:
- get the Process Identifier (PID) identifying a current instance of the current application,
- get the binary executable file attached to this PID (for example using procfs and filp_open for a Linux kernel),
- compute the application digest over this binary file using the same method as in step #1,
- send an IOC_IOCTL_CMD_AUTH message over the IOC interface to the TOS IOC driver with the application digest, application signature and customer certificate.

Step #3: Upon reception of this message, the TOS IOC authentication task will:
- check the provided application certificate using the Root Authority Certificate (RAC) previously stored in the secured memory,
- check the provided application signature using the application digest and the customer public key embedded into the validated certificate,
- return success or error to GPOS, depending on the result of the preceding operations.

The IOC kernel module stores this returned authentication state in the kernel context associated with the PID of the instance of the current application. Then, it notifies the instance about a success or a failure of the authentication request.

Step #4: The instance of the current application executes one or more primitives classified as secured. The GPOS kernel, prior to forwarding the content of a request from a secured primitive to the TOS in step#5, filters this request by checking said authentication state associated with the PID of the current instance.

Step#5: The GPOS kernel forwards the secured request (when not filtered) to the TOS, to go on with the execution of the current application.

This solution is secured since it can be assumed reasonably that an attacker cannot modify the value of the authentication state returned to the kernel (and which can be stored in the kernel memory). However, this assumption can be weak if an attacker is able to map kernel memory into the user space with read/write access. Then, by modifying the value of this variable, the attacker may be able to execute a request that requires application authentication.

The method according to a second embodiment remains similar to the first embodiment presented above, except that the GPOS kernel module is not in charge of filtering incoming requests issued by the application, once the authentication state has been determined by the TOS for the current instance of the application (after steps #2 and #3). In this solution, the Trusted OS (TOS) is fully in charge of filtering directly the requests from primitives to access to the TOS. The message IOC_IOCTL_CMD_AUTH and the primitive IOC_*CtrlReq_AppAuth* return now an authentication token directly to the current instance of the application if the authentication state is "success". If the authentication state is "failure", a "null" token (which is an invalid token) is returned. To that end, the token value associated to the PID of the current application instance is stored in the TOS memory.

The token value is then used as an additional parameter to every further request of a secured primitive (named *IOC_Ctrl_Req_SecXXX*) by the application, in step #4.

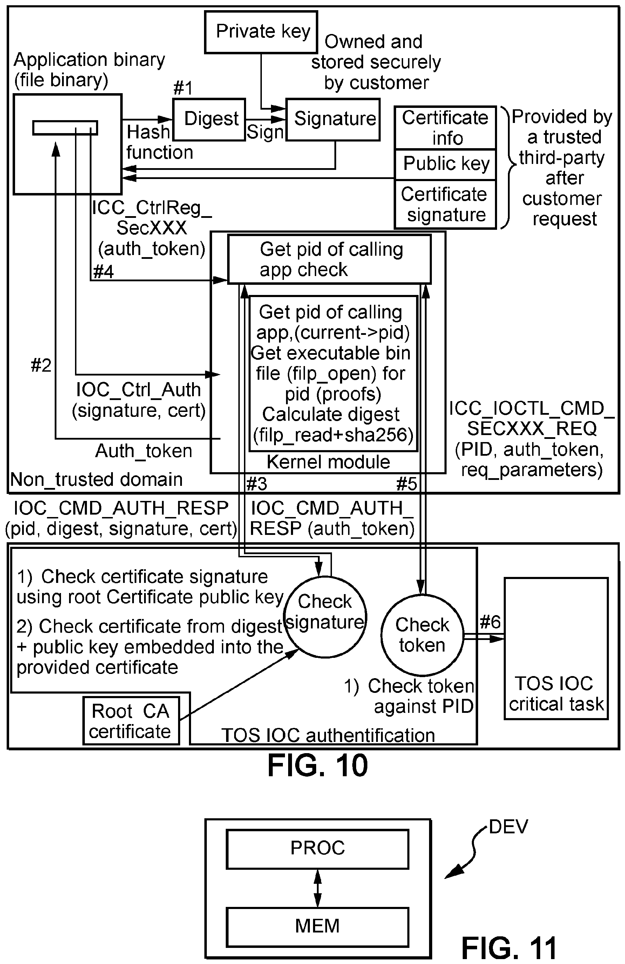

The kernel module passes this authentication token and also the PID of the current application instance as arguments of any IOC_IOCTL_CMD_SECXXX message over the IOC interface, in step #5. Then, for each request from a secured primitive, the TOS checks the validity of the token before executing the carried request in step #6 shown on figure 10. The TOS can compare the token value stored in its secured memory to the token value presented in the message. The TOS can therefore discard typically a request from a secured primitive presented in a message having an invalid token in its arguments. The invalid token can be a "null" token as explained above (because the authentication failed) or any other invalid token, for example a token value previously used (e.g. for a previous instance) so as to avoid a replay attack. Those additional steps require few computing and memory resource on the TOS side but completely secures the filtering step.

The PID is passed to the TOS by the kernel module so that it prevents from PID hijacking attack. In such an attack, a malicious application robs a valid token to an application that succeeds authentication step. The PID is determined by the kernel code so it is important the kernel binary code is not altered, or at least any alteration can be detected by the TOS by doing periodic code checking.

Compared to the first embodiment presented above, the kernel module in this second embodiment does not store any critical data in the private context associated with the file descriptor passed in the driver calling functions. Therefore, an attacker cannot modify the value of the variable by mapping kernel memory into the user space, and thus allowing the execution of request that requires application authentication.

As to now the signature of the application binary code, the signature generation/checking can rely on the usage of asymmetric cryptography (private/public keys). Two schemes can be proposed:
- A first scheme can be entirely managed by the customer, but it can require a secure TOS setup by the customer prior to deployment,
- A second scheme can rely on root certificate usage and can be deployed without any TOS setup (factory configuration can be enough).

According to the first scheme (without PKI), the customer can generate by itself a private/public key pair. Private key must be stored securely (not on the platform typically) and is used to sign the application runtime binary. The public key is embedded into a self-signed certificate. This certificate is stored into the Trusted domain (TOS) and the embedded public key will be used to check signature.

According to the second scheme (with PKI), the customer can generate a private/public key pair, but the private key is stored securely by the customer and is used to sign the application runtime binary. A Root Certification Authority (CA) certificate is stored securely in the Trusted domain (TOS). The aforesaid Certification Authority may be the manufacturer (i.e. the provider of the authentication means) or any trusted third-party company.

The customer can send the public key to the issuer (CA) that will generate the customer certificate containing:
- certificate information (customer information, issuer information certification expiration date, etc.),
- customer public key, and
- a certificate signature that is generated using a root CA private key, as explained above.

In another embodiment, some Intermediate certificates can be generated by the CA. Signature of the customer certificate can be generated by using the private key associated to one of the Intermediate certificates. Intermediate certificates shall be uploaded to the TOS using a specific ICC IOTCL command. After upload, the TOS checks the validity of the provided certificate compared to the stored root CA certificate. Benefit of this method is mainly for the CA avoiding a frequent use of the root CA and limiting thereby its exposition to a potential attacker. It is also more flexible, in particular when some certificates must be revoked.

For example, a certificate revocation list (CRL) can be associated to each stored certificate. CRL can be stored as a list of digital certificates that have been revoked by the issuing CA before their scheduled expiration date and should no longer be trusted. CRL can be stored by TOS and shall be updated using a specific ICC IOTCL command. To avoid an attacker to send the list CRL and induce a deny of service because of fake certificate, primitives related to certificate management must be classified in the Secure group.

A computer program, having an algorithm following the steps of the method presented as possible embodiments above, can be deployed in any type of products using an embedded platform running a main Operating System with a Trusted Execution Environment executing secure operation and requests issued by application running over said main OS. The hybrid software architecture consisting of running a Generic Purpose OS as main OS, and a TOS as a Trusted OS is a specific case of this overall architecture.

The method can therefore be implemented by next-generation devices of Industrial Controllers such as PLC (programmable logic controller) or any IC communication devices. They shall be connected on a single physical bus mixed with other telecommunication devices that may be corrupted and controlled by some attacker. The implementation of the method is then very useful since it provides security solutions to protect access to critical functions of IC devices.

Figure 11 shows schematically a computer device DEV according to an embodiment of the present specification, comprising a processing unit to implement the method described above. The processing unit can comprise a processor PROC and a memory MEM storing at least instructions of a computer program according to the present description. This computer program can correspond to low-level layer programs of a GPOS and a TOS according to a secured hybrid architecture. The processor PROC can cooperate with the memory MEM to read the instructions and implement consequently the method described above, when a current application is launched by the computer device DEV.

## Claims

1. A method to secure data processing in a computer arranged according to a hybrid software architecture, said hybrid architecture relying on a dual operating system comprising a General-Purpose Operating System "GPOS" and a Trusted Operating System "TOS" running critical functions,
The execution of a current application by the GPOS implying an access of at least one primitive to the TOS,
Wherein the method comprises:
- implementing by the GPOS an authentication procedure requiring an authentication validation granted by the TOS, and
- upon at least a validation of the authentication by the TOS, authorizing said at least one primitive to access to the TOS.

2. The method of claim 1, wherein a computer program of said current application comprises at least one instruction, the execution of which by the GPOS launches said at least one primitive requesting access to the TOS.

3. The method according to anyone of claims 1 and 2, wherein, upon request by said at least one primitive to access to the TOS, a system call launches a specific authentication primitive (IOC), causing the GPOS to implement the authentication procedure.

4. The method according to claim 3, wherein the launching of the specific authentication primitive (IOC) generates a request (#2) from the GPOS to access to the TOS with authentication parameters.

5. The method according to anyone of the precedent claims, wherein the GPOS requires to the TOS said authentication validation on the basis of authentication parameters comprising at least a first set of certificate data, and wherein the authentication procedure comprises a verification (#3) performed by the TOS of said first set of certificate data provided by the GPOS against a second set of certificate data previously stored by the TOS.

6. The method of claim 5, wherein the first set of certificate data comprises data of a customer certificate, and the second set of certificate data comprises data of a root authority certificate as a trusted certificate, stored in a secured memory accessible only by the TOS at an initialization step (#0) of configuring the TOS.

7. The method according to anyone of claims 5 and 6, wherein an application digest is calculated by the GPOS in a preamble step (#1) of installation of the current application, and a digital signature of a binary code of the current application is generated using the application digest and a private key associated with a public key the data of which are among said first set of certificate data.

8. The method according to claim 7, when combined to anyone of claims 3 and 4, wherein said specific authentication primitive (IOC_*CtrlReq_AppAuth*) launches (#2), before the execution of each current instance of the current application, a request to access to the TOS with said generated signature and said first set of certificate data, and wherein a kernel module of the GPOS processes said request by:
- getting a Process Identifier "PID" of the current application instance,
- getting a binary executable file attached to said PID,
- computing an application digest over said binary file of the type of the application digest generated in said preamble step (#1), and
- sending a message (IOC_IOCTL_CMD_AUTH) to the TOS with the application digest, said generated signature and said first set of certificate data.

9. The method according to claim 8, wherein, upon reception of said message, the TOS proceeds (#3) to an authentication by:
- checking the provided first set of certificate data against said second set of certificate data securely stored in the TOS,
- checking the provided application signature using the application digest and a public key embedded into said first set of certificate data, using an asymmetric cryptography algorithm,
- signaling by sending an authentication state to the GPOS, of a success or an error, depending on the result of said checking.

10. The method according to claim 9, wherein the GPOS kernel module stores said authentication state in association with the PID of the current application instance, so as to filter requests initiated by one or several primitives of said current application, based on said authentication state.

11. The method according to claim 9, wherein said GPOS and TOS are interconnected through Inter-OS-Communication "IOC" mutual interfaces, and wherein each primitive requesting access to the TOS is filtered at one of the IOC interfaces, by the TOS using said PID for each current application instance, so as to avoid possible attacks from the GPOS kernel module.

12. The method according to claim 11, wherein the TOS returns a single token per current application instance, as the result of the authentication request, said token having a value defined by said authentication state, so as to avoid a fraudulent reuse of said token for other current application instances.

13. A computer program comprising instructions causing the implementation of the method according to anyone of the precedent claims, when said instructions are executed by a processing unit.

14. A current application's computer program, comprising at least one instruction which is executed when said current application's computer program is run, and the execution of which by the GPOS launches at least one primitive requesting access to the TOS, causing thereby the implementation of the authentication procedure of the method according to anyone of claims 1 to 12.

15. A computer device, comprising a processing unit to implement the method according to anyone of claims 1 to 12.
